(19) **Europäisches Patentamt / European Patent Office / Office européen des brevets**

(11) **EP 3 474 241 A1**

(12) **EUROPEAN PATENT APPLICATION**

(43) Date of publication:
24.04.2019 Bulletin 2019/17

(51) Int Cl.:
**G07C 13/00** (2006.01)          **H04L 9/00** (2006.01)

(21) Application number: **18191555.4**

(22) Date of filing: **29.08.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.10.2017 US 201715785479**

(71) Applicant: **AO Kaspersky Lab**
**Moscow 125212 (RU)**

(72) Inventors:
• **CHEPEL, Dmitry M.**
**125212 MOSCOW (RU)**
• **ALESHKIN, Roman V.**
**125212 MOSCOW (RU)**

(74) Representative: **Chimini, Francesco**
**Jacobacci & Partners S.p.A.**
**Piazza della Vittoria 11**
**25122 Brescia (IT)**

(54) **ELECTRONIC BALLOTING**

(57) Disclosed are systems and methods for determining ballots of voters collected for a plurality of candidates using electronic balloting. For each election observer, a public key associated with a respective election observer for encrypting ballots of one or more voters and a private key associated with a respective election observer for decrypting the ballots of the one or more voters are created. Further, decentralized registers of records for keeping track of ballots cast and received by the respective election observers from the voters. Ballot are cast by voters using the respective public keys of election observers and signed by a digital signature for each voter. At the end of balloting, the modified decentralized registers of records are decrypted using the private keys and the number of ballots cast by the voters for each candidate is calculated.

Fig. 1

EP 3 474 241 A1

**Description**

**FIELD OF TECHNOLOGY**

The present disclosure relates generally to the field of electronic balloting systems, more specifically, to systems and methods of determining ballots of voters collected with the aid of electronic balloting.

**BACKGROUND**

The widespread use of various computing devices (personal computers, notebooks, tablets, smartphones, and so forth), the advent of available high-performance servers, the manifold increase in the traffic capacity of computer networks and the significant lowering of the price of network traffic for end users in recent years have provided a powerful impetus for the use by individual users and entire organizations of distributed data processing systems, where data is formed on certain computing devices, processed on others, and stored on yet other devices. Cloud services are becoming ever more popular, in which the personal computing devices of the users are often employed as mere terminals. For example, online banking, hotel reservation and transportation ticketing systems, and rating systems (producing reviews of movies, for example) may appear in such cloud services.

The aforementioned distributed data processing systems also include electronic balloting systems - systems in which a user may vote for a candidate (e.g., during elections) or post a rating review (e.g., for a film viewed, a book read, or merchandise purchased) by using their computer. The benefits offered by an electronic balloting system include the ease of voting (only requiring the user's computer with specialized software provided and access to a computer network, such as the Internet), efficiency (the user may vote at any time and in any place with access to the computer network), and vote count accuracy (all votes are counted and stored centrally, and the counting is done efficiently and automatically, ruling out human error). Electronic balloting systems are also able to handle the tasks of heightened security (decreasing election violations such as compelling early voting, ballot box stuffing, vote fraud, deliberate vote counting errors, and so forth) and reliability of voting results.

One may identify two main tasks which a system of electronic balloting should solve effectively: voter anonymization and protection against vote falsification. Voter anonymization refers to any technology making it possible to conceal the voter and the vote cast during all stages of the balloting. Voter anonymization assures the secrecy of the voting, so that over the entire course of the voting, in all its phases, starting from voter registration and ending with the counting of votes after the voting is finished, it is not possible to determine who each voter voted for. Protection against vote falsification can refer to a technology which can counteract various kinds of falsification, including: bribery, administrative pressure, or blackmailing of voters; counterfeiting of votes (such as ballot box stuffing when paper ballots are used, replacing one vote with another, and so on); unlawful interference with the work of the voting observers at the balloting stations; and deliberate mistakes in vote counts. Vote falsification can also include various kinds of "carousels", which are methods of influencing the outcome of balloting involving bribery of a voter, consisting in giving the voter, before they enter the voting booth, a pre-filled ballot, which the voter needs to cast in the ballot box, taking away the new, empty ballot and exchanging it for money or other material valuables from the organizer of the "carousel", who fills out the empty ballot and gives it to the next voter. Vote falsification also includes counterfeiting of voting records (for example, deliberately entering false data in the final balloting results); changing of voting results at those balloting stations where the "wrong" candidate won or where the results obtained at the balloting station may significantly affect the general results of the election, preventing the "right" candidate from achieving a victory; and so forth.

Although the known methods for electronic balloting systems may deal with the tasks of conducting an electronic balloting (i.e., recording and counting of the votes), they do not meet the needs of security (fewer violations during elections) or confidentiality of the votes (ensuring secrecy of voting so that during the entire voting process and at every stage thereof it would not be possible to determine who each voter voted for), and cannot deal with unauthorized modification of the results of the electronic balloting.

**SUMMARY**

Thus, aspects of the present disclosure make it possible to solve the problem of determining the number of votes cast and gathered by electronic balloting, ensuring the confidentiality of the electronic balloting.

In one example, a method for voting in an election using electronic balloting comprises: receiving a unified balloting key associated with the election; obtaining a digital signature associated with a user based on voter identification information of the user; receiving user input selecting one of a plurality of candidates in the election; generating a ballot for the user comprising data specifying the selected candidate using the unified balloting key and the digital signature; and transmitting the generated ballot to a computing device associated with an election observer of the election.

In one example, generating the ballot comprises: encrypting a candidate identifier associated with the selected candidate encrypted using the unified balloting key, wherein the candidate identifier comprises a prime number.

In one example, generating the ballot comprises: the generating the ballot further comprises: signing the encrypted candidate identifier using the digital signature associated with the user.

In one example, generating the ballot comprises: the obtained digital signature comprises a public key provided to the election observer to verify the vote cast by the user and a private key used to sign the vote cast by the user.

In one example, generating the ballot comprises: generating the ballot for the user comprises: determining as a candidate identifier M associated with the selected candidate, wherein M is a prime number and has a value less than a random prime number q; selecting a session key $\alpha$, such that $1 < \alpha < q - 1$; and generating the ballot as a set of number x and y by calculating $x = g^\alpha \bmod q$ and $y = h^\alpha M \bmod q$, where g is a primitive root of q.

In one example, generating the ballot comprises: transmitting the generated ballot further comprises: receiving a list of network addresses of a plurality of computing devices associated with a plurality of election observers of the election; and transmitting the generated ballot to each of the plurality of computing devices associated with the plurality of election observers using the received list.

In one example, generating the ballot comprises: generating the ballot for the user comprises using at least one of: ElGamal encryption scheme, a Merkel-Hellman cryptosystem, and a Rabin cryptosystem.

In another example, a system for voting in an election using electronic balloting comprises: a processor configured to: receive a unified balloting key associated with the election; obtain a digital signature associated with a user based on voter identification information of the user; receive user input selecting one of a plurality of candidates in the election; generate a ballot for the user comprising data specifying the selected candidate using the unified balloting key and the digital signature; and transmit the generated ballot to a computing device associated with an election observer of the election.

The above simplified summary of example aspects serves to provide a basic understanding of the present disclosure. This summary is not an extensive overview of all contemplated aspects, and is intended to neither identify key or critical elements of all aspects nor delineate the scope of any or all aspects of the present disclosure. Its sole purpose is to present one or more aspects in a simplified form as a prelude to the more detailed description of the disclosure that follows. To the accomplishment of the foregoing, the one or more aspects of the present disclosure include the features described and exemplarily pointed out in the claims.

## BRIEF DESCRIPTION OF THE DRAWINGS

The accompanying drawings, which are incorporated into and constitute a part of this specification, illustrate one or more example aspects of the present disclosure and, together with the detailed description, serve to explain their principles and implementations.

**Fig. 1** is a block diagram depicting a system for determining the number of votes collected by means of electronic balloting.

**Fig. 2** is a flowchart illustrating a method for determining the number of votes collected by means of electronic balloting.

**Fig. 3** is a block diagram of a particular embodiment of the system for counting votes by means of electronic balloting.

**Fig. 4** is a flowchart of a particular embodiment of the method of working of the balloting organizer.

**Fig. 5** represents an example of a general-purpose computer system, a personal computer or a server.

## DETAILED DESCRIPTION

Exemplary aspects are described herein in the context of a system, method and computer program product for determining the number of votes collected by means of electronic balloting. Those of ordinary skill in the art will realize that the following description is illustrative only and is not intended to be in any way limiting. Other aspects will readily suggest themselves to those skilled in the art having the benefit of this disclosure. Reference will now be made in detail to implementations of the example aspects as illustrated in the accompanying drawings. The same reference indicators will be used to the extent possible throughout the drawings and the following description to refer to the same or like items.

The following definitions and concepts will be used in describing variant embodiments of the present disclosure.

*Voter anonymization* refers to an algorithm ensuring voting secrecy (concealment of the voter's choice), so that throughout the voting process, in all of its stages, starting from voter registration to the final counting of the votes cast for each candidate participating in the balloting, at the end of the voting it is not possible to determine who the voter voted for.

*Balloting* refers to a group of actions aimed at identifying at least one candidate out of at least two candidates on the basis of data characterizing the choice of the voters.

*Voter* refers to a subject or group of subjects participating in the voting (including with the aid of computing devices) by making a choice of at least one of the candidates registered in that balloting, forming and transmitting the data characterizing that choice (hereinafter called the *vote of the voter*) to the balloting organizer for subsequent use of that data in calculating the results of the balloting carried out.

*Observer* refers to a subject or group of subjects monitoring the course of the balloting (including that with the use of computing devices) by checking the correctness of formation of the votes of the voters and the correctness of use of those votes of the voters when calculating the results of the balloting carried out.

*Balloting organizer* refers to a subject or group of subjects controlling the course of a balloting (including that with the use of computing devices) by establishing criteria for voting, the registration of candidates, observers, and voters, the organizing of their interaction with each other and the calculating of the results of the balloting.

*Decentralized register of records* refers to a data structure (such as a natural number) formulated according to definite rules on the basis of input data and the prior state of the decentralized register of records (previously formulated data). All of the states of the decentralized register of records form a distributed database, with which one works on the basis of transactions of the aforesaid input data, while in order for a transaction to be considered trustworthy ("confirmed") its format and signatures need to be verified, and then entered into a special structure - the decentralized register of records.

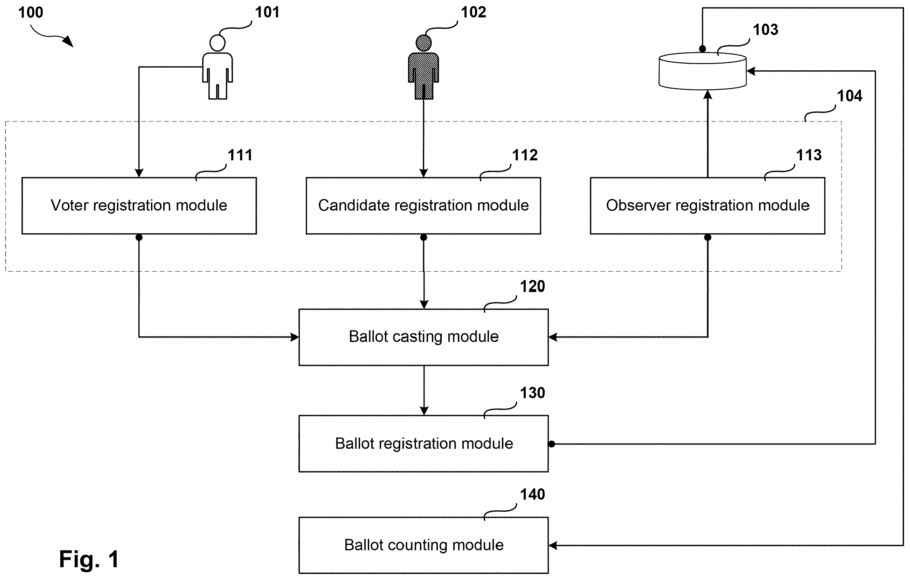

**Figure 1** is a block diagram depicting a system **100** for determining the number of votes collected by means of electronic balloting. The system **100** includes a voter **101**, a candidate **102**, an observer **103**, a balloting organizer **104**, a voter registration module **111**, a candidate registration module **112**, an observer registration module **113**, a vote casting module **120**, a ballot registration module **130**, and a vote counting module **140**.

In one variant embodiment of the system for concealment of the choice of the voter **101** made during a balloting process, the homomorphic properties of an ElGamal cryptosystem are used. The system is based on the difficulty of finding a discrete logarithm in a finite residue field. The principles of zero-knowledge proof are used to conceal the voter's **101** choice of candidate **102** and as proof that this concealed choice is valid. Thus: even the theoretical possibility of an invalid choice is ruled out; and the choice of the voter **101** is concealed during the stage of collection of the votes of the voters **101**. Meanwhile, the validity of the choice of a candidate **102** comprises a choice meeting the balloting criteria established by the balloting organizer **104** (for example, only a previously registered voter **101** may vote, the choice may only be from the list of candidates **102**, only one of all the candidates **102** may be chosen, and so on).

The voter **101** is the subject who is voting for at least one of the candidates **102** by transmitting a vote with the help of means available to the voter **101** or provided by the balloting organizer **104**. In one variant embodiment of the system, the voter **101** participates in the balloting with the use of a computing device of the voter **101**. This participation in the balloting may involves at least the following steps. The user or group of users register as a voter **101** with the help of the voter registration module **111** based on their identification data for participation in said balloting. The voter **101** directly participates in said balloting, which includes making a choice of at least one candidate **102**, casting a ballot of the voter **101** based on data on that choice, and transmits the cast ballot of the voter **101** for subsequent use in calculating the results of the balloting conducted. When voting is concluded, the results of the balloting is calculated.

In yet another variant embodiment of the system, the computing device of the voter **101** is at least: a personal computer, a notebook, a tablet, a mobile device (such as a mobile telephone, smartphone, and so on), on which the software (for example, a third-party application or browser providing access to an online balloting service working on the server of the balloting organizer **104**) is running, provided by the balloting organizer **104** (for example, downloaded and installed from the site of the balloting organizer **104**).

For example, the citizen of a country, to participate in upcoming presidential elections (balloting), goes to the site of the official electoral commission, which is the balloting organizer **104**, downloads and installs on their mobile telephone the specialized application "voteApp". After this, from their mobile telephone with the aid of the application "voteApp" they register as voter **101**, after which they receive on their mobile telephone all necessary information about the upcoming elections (including the list of candidates **102**, the time when the elections will take place, the criteria of the upcoming elections, support service numbers, and so forth) and the data needed by the application "voteApp" for casting the vote of the voter **101** (the identifier of the voter **101**, encryption keys, and so on) and transmitting the cast vote of the voter **101** for its subsequent use in calculating the results of the elections held (the addresses of the servers where the cast vote may be sent, data on the owners of those servers and the observers **103** who own or control the working of those servers, and so on). Directly during the elections, the voter **101** from their mobile telephone and using the application "voteApp" makes a choice of candidate **102**. The data on the choice of the voter **101** (formulated by the application "voteApp" into the vote of the voter **101**) is sent to the balloting organizer **104** (or to the observers **103**, if such an option is supported). Prior to the end of the elections, the voter **101** may be presented the opportunity for another vote. For example, the voter **101** may select a different candidate **102**, or cast a vote which will be used in place of a previously cast vote when calculating the results of the balloting carried out. Upon completion of the elections, information about the results of the elections (the name of the winner, the distribution of votes by candidate **102**, the voting dynamics by region, by time, and so forth) will be sent to the mobile telephone of the voter **101**.

The candidate **102** is the subject (or object) for whom (or for which) the voter 101 is voting, whose votes are used by the balloting organizer **104** to calculate the results of the balloting and verified by the observers **103**.

In one variant embodiment of the system, the candidates **102** on the basis of their identification data are assigned identifiers (numbers) (for example, by the balloting organizer **104**), and the voter **101** when casting a vote uses this identifier of the chosen candidate **102**. For example, if balloting is being conducted for the office of president among Smith, Johnson and Williams, each candidate **102** for the office of president may be assigned an identifier (Smith: 31415, Johnson: 92653, Williams: 58979), which will be used afterwards for the casting and using of the votes of the voters **101** when calculating the results of the balloting carried out.

In one variant embodiment of the system, the registration of the candidate **102** with the help of the candidate registration module **112** may commence with the sending of the identification data of the candidate **102** by the voter **101** from the computing device of the voter **101**. For example, a book publisher who is the balloting organizer **104** has announced a voting among the purchasers of its products for the best artistic production published in the past year. The voter **101** may be a person who has downloaded the application "bookVoteApp" onto their tablet from the site of the book publisher and registered as a voter **101**. The voter **101** from their tablet and using bookVoteApp prior to the start of the voting sends to the balloting organizer **104** a list of titles of artistic productions which in the opinion of the voter **101** may take part as candidates **102** in the upcoming voting, the titles of the artistic productions playing the role of the identification data of those candidates **102**. The balloting organizer **104** after receiving the aforementioned list from the voter **101** performs the necessary verifications to make sure that the artistic productions from the list received meet the requirements placed on the candidates **102**, after which the artistic productions having been verified are registered as candidates **102** in the upcoming voting and are assigned candidate **102** identifiers.

An observer **103** (also referred to as an election observer) is a subject or group of subjects monitoring the course of the balloting (including with the use of computing devices programmed to track the course of the balloting by predetermined criteria established by the balloting organizer **104** and sent to the observers **103**, on the basis of the data being formed in the course of the voting), which consists in verifying the correctness of the votes cast by the voters **101** and the correctness of the use of those votes of the voters **101** in calculating the results of the balloting carried out. For example, the observers **103** in the balloting to elect the president of a country may be the election headquarters of each of the candidates **102**. Thus, the election headquarters may not only verify the correctness of use of the votes of the voters **101**, cast on the basis of the choice of the voters **101** for a candidate **102** by the mentioned observers **103**, but also the falsifiability of the elections themselves (i.e., the correctness of use of the votes of the voters **101** cast on the basis of the choice by the voters **101** of all other candidates **102**).

In one variant embodiment of the system, data on the observers **103** after registration with the aid of the observer registration module **113** is sent to the voters **101**. In some examples, the data on the observers **103** may include a list of addresses of servers being used by the observers **103** to which the voters **101** can send their votes. In some examples, the data on the observers **103** may include general information on the observers **103** (including which candidate **102** they are working for) on the basis of which the voters **101** may decide as to the choice of which observer **103** the votes for the candidates **102** will be sent.

The registration of the observers **103** may be done by the balloting organizer **104**. The primary tasks in the registration of the observers **103** involve: verification of the computing device(s) of the observers **103** as to the possible use of the votes of the voters **101** (including a verification of the computing power, the fault resistance and the resistance to unauthorized access); and verification of the independence of the observers **103** (verification that the observer **103** together with other observers **103** will not exert influence on the course of the balloting), discovery of connections with other observers **103**, accounts of possible unlawful activity in falsification of voting results, and so forth.

The balloting organizer **104** is the subject or group of subjects exercising control over the course of the balloting. This control may include with the use of computing device(s) programmed to carry out the balloting according to established criteria on the basis of predetermined or dynamically arriving input data, such as lists of voters **101**, candidates **102**, observers **103**, anticipated results of the balloting, and so forth. To determine anticipated results of the balloting, previously calculated distributions of the votes of the voters **101** between the candidates **102** is used to assess the possibility of voting falsification in the case where the calculated results of a current balloting and previously calculated results differ significantly from each other. The ballot organizer **104** may determine the criteria of the balloting (for example, determining the start and end of the balloting), the registration of candidates **102**, observers **103** and voters **101**, the organization of their interaction with each other, the identification and elimination of errors arising in the course of the balloting, and the calculation of the results of the balloting.

In some examples, the balloting organizer **104** may establish criteria for voter **101** registration. For example, the possibilities of the voters **101** (or the functionality of the computing devices of the voters **101**) using, in the balloting being conducted by the balloting organizer **104**, data on the candidates **102** and observers **103**. The balloting organizer **104** may determine the list of candidates **102** from which the voter **101** may make a selection (different voters **101** possibly having different lists of candidates **102**), and the list of observers **103** to whom the voter **101** may send the vote cast by the voter **101** (different voters **101** possibly having different lists of observers **103**). The balloting organizer **104** may determine the number of candidates **102** which the voter **101** may select, and the individual voting time for each voter **101** or group of voters **101**.

In some examples, the balloting organizer **104** may further establish criteria for candidate **102** registration (for example, the number of candidates **102** taking part in the elections being organized); observer **103** registration (for example, the minimum requirements on performance, fault tolerance and resistance to unauthorized access to the computing device(s) provided by the observers **103** to keep track of the votes of the voters **101**); and criteria for the balloting and calculating of the balloting results (for example, the start time and the duration of the balloting, the possibility of the voters **101** voting for several candidates **102**). In some examples, the balloting organizer **104** may establish criteria for the rules for the interaction between voters **101** and observers **103**. For example, the balloting organizer **104** selecting servers from a list of servers provided by the observers **103** to which the voters **101** may send their ballots).

In one example scenario, a group of people are preparing to elect their chairman. In order to carry out the balloting, at first a balloting organizer **104** is chosen, who may be the most respected member of that group, chosen in collegial manner, or may be brought in from the outside to create an independent electoral process. Formed from the people comprising that group are: the voters **101** (who may be the entire group), the candidates **102** (who also may act in the capacity of a voter **101**), and observers **103** (for example, each candidate **102** and the group of voters **101** supporting him may form an observer group **103**).

Since the balloting organizer **104** may possess a computing device to conduct the balloting (depending among other things on the number and the geography of the voters **101**, the duration of the voting process, the level of protection against unauthorized interference in the course of the balloting, and so on), often the observer **103** may be a third party enjoying a certain reputation (having a portfolio of successfully conducted elections, a high level of trust on the part of the voters **101** or the balloting organizer **104**) and possessing the computing device(s). For example, on one end of the spectrum, for presidential elections of a country, the balloting organizer **104** might be the election commission formed on the basis of the election legislation, possessing computing device(s) provided by the government, and so forth. In another example, on the other end of the spectrum, for elections for the head of an institution, the balloting organizer **104** might be a third party (such as commercial or noncommercial firms, government services, etc.) brought in (either on commercial terms or on an unpaid basis), whose primary activity consists in the organizing and conducting of small elections (just as mailing services may be created independently or can make use of already existing mail services such as Gmail®).

The voter registration module **111** may run on the computing device of the balloting organizer **104** and is configured to create, for each voter **101**, a digital signature of the voter **101**, to be used in casting the ballot of the voter **101**. The voter registration module **111** may be further configured to send the created digital signature of the voter **101** to the computer device of the voter **101**.

In one variant embodiment of the system, the created digital signature of the voter 101 is a set of public and private keys to be used in an asymmetrical encryption system. In such an embodiment, the public key, which will be used to verify the votes cast by the voters **101**, is sent by the voter registration module **111** to the computing device of the observers **103**. And, the private key, which will be used to sign the vote cast by the voter **101**, is sent by the voter registration module **111** to the computing device of the voter **101**. As described in greater detail below, when a voter selects a candidate they wish to vote for, the data indicating the vote (e.g., including at least a candidate identifier) is encrypted with a unified balloting key, and the encrypted vote is then signed using the digital signature of the voter. When an observer receives the generated vote from the voter, the observer may use the digital signature to check whether this voter has already voted, whether this voter has the right to participate in the election, whether the voter is registered in the system, and whether it is a fake signature, etc.

In yet another variant embodiment of the system, at least one of the following algorithms is used to create the digital signature of the voter **101**: the ElGamal scheme, the Schnorr scheme, the probabilistic Rabin signature algorithm, the probabilistic RSA-PSS scheme (RSA Signature Scheme with Appendix-Probabilistic Signature Scheme), and the DSA, ECDSA (Elliptic Curve Digital Signature Algorithm).

In yet another variant embodiment of the system, the voter registration module **111** carries out the collection and storage of data on the voters **101**. The data on the voters **101** may be the contact data at which information can be exchanged between the voters **101**, the observers **103** and the balloting organizer **104**. The voter registration module 111 may also carry out the determination of the rights of the voters **101** for whom data was previously obtained to take part in the balloting being conducted by the balloting organizer **104**. The rights of the voters **101** may include the right to change one's vote in the course of the balloting, to delegate one's vote to another voter **101**, and to register a candidate **102** with the aid of the candidate registration module **112**.

In yet another variant embodiment of the system, the voter registration module **111** when accessed by a user not yet registered as a voter **101** may be configured to carry out a verification as to whether that user can be a voter **101** for the balloting being organized. If so, a successful verification of the creation for each user of a voter **101** identifier.

For example, in order to take part in balloting being organized by a balloting organizer **104**, a voter **101** may first send to that organizer their voter data (such as passport data, information on occupation, education, interests, and so on.) This voter data may be used to determine the voter **101** rights and make a decision as to which balloting the voter **101** may take part in, including among other things the contact data (such as an email address) where the balloting organizer may communicate with the voter **101** to send him the digital voter **101** signature created.

Several examples of how the voters **101** may be registered is as follows. In one scenario, a balloting is being organized to select the winner in a competition for "Man of the Year" at a Company A. First, the balloting organizer **104** notifies by email all employees of Company A as to the upcoming balloting and provides the address of a resource on the Internet where all employees wishing to take part in the balloting may register themselves. Then, the employees via a browser go to the indicated address, familiarize themselves with the conditions of the upcoming balloting and the candidates **102** and give their consent to take part in the mentioned balloting. After an employee has given consent to take part in the mentioned balloting, they are automatically registered as a voter **101**, is assigned an identifier, and a digital voter **101** signature is created and sent to the voter **101** (for example, by email). After the company employee has been registered as a voter **101**, they may also take part in the preliminary selection of candidates **102** in the "Man of the Year" competition, having presented their candidate **102** or themselves. Since the voter **101** has expressed a desire to take part in the upcoming balloting, they may receive information: as to the course of preparations for the balloting (for example, the appearance of new candidates **102**) and the status of the mentioned balloting; as to the start of the balloting; as to the course of the balloting, the change in status of the course of the balloting, the withdrawal of candidates **102** or the need for another balloting; and on the completion of the balloting and on the results of the balloting.

In another scenario, a balloting is being organized to elect the president of the country, data on the citizenry may be already present at the election commission playing the part of the balloting organizer **104**. Therefore, the citizens are already potential voters **101**, and their data (passport data, residential addresses, etc.) is available to the election commission **104**. As a result, the citizens may be sent their digital voter **101** signatures at once, as well as data describing the upcoming elections for president (e.g., when the balloting will take place, which candidates for president are taking part in the elections, the electronic addresses of the servers where a vote may be cast, and so on).

The candidate registration module **112** runs on the computing device of the balloting organizer **104** and may be configured to create, for each candidate **102**, a candidate **102** identifier and send the created candidate **102** identifiers to the computing devices of the voters **101**. In some examples, the candidate **102** identifier may be a simple number.

In one variant embodiment of the system, the candidate registration module **112** is also configured to collect and store data on the candidates **102**, present to the voter registration module **111** the candidate **102** identifiers and the data collected on the candidates **102** for subsequent presenting thereof to the voters **101**.

In yet another variant embodiment of the system, a voter **101**, or an initiative group may register their candidate **102**, if the candidate **102**, the voter **101**, or the initiative group meet the criteria established by the balloting organizer **104**. The transmittal of the necessary data for registration of a candidate **102** may be done from the computing device of the voter **101** using the specialized software provided to the voter **101** by the balloting organizer **104**.

For example, for the election for president of the country a balloting organizer **104** is instituted, being an election commission. The balloting organizer processes the data on the proposed candidates **102** presented by the citizens, the initiative groups, and the parties. If the nominee meets the requirements for a candidate **102**, set forth in the election legislation, or if no violations have been recorded upon nomination of the candidate **102**, the nominee is confirmed as candidate **102** in the balloting being organized. The registered candidate **102** is assigned a candidate **102** identifier.

The observer registration module **113** may run on the computing device of the balloting organizer **104** and may be configured to create, for each observer **103**, based on the identification data obtained about the observer **103** a public key to be used for encrypting the ballot of the voter **101** and a private key to be used for decrypting the ballot of the voter **101**. The observer registration module **113** may be configured to also create, for each observer 103, based on the identification data obtained from the observer **103** a decentralized register of records which will be modified to take into account the ballots cast and received by the observer **103** from the voters **101**. In some examples, the observer registration module **113** may be configured to send the created decentralized registers of records to the computing devices of the observers **103**, send the created private keys to the vote counting module **140**, create on the basis of the created public keys of all the observers **103** a unified balloting key, and send the unified balloting key to the computing devices of the voters **101**.

In one embodiment of the system, the observer registration module **113** is further configured to verify on the basis of the private keys of at least two observers **103** the unified balloting key created. Responsive to determining the result of the aforementioned verification is positive, the observer registration module **113** may send the unified balloting key created to the computing devices of the voters **101**.

In yet another variant embodiment of the system, the public and private keys created are used in an ElGamal cryptosystem, the exchanging of Diffie-Hellman keys, and the Williams cryptosystem.

In yet another variant embodiment of the system, the unified balloting key created is verified (i.e., determine whether the private keys of the observers **103** and the unified balloting key have been created in keeping with the established rules and on the basis of the data presented by the observers **103**) on the basis of the private keys for at least two observers **103** and if the result of the verification is positive it is presented to the voters **101** for the purpose of being used in the subsequent casting of a vote by the voter **101**.

In yet another variant embodiment of the system, the observer registration module **113** may be further configured to collect and store data on the observers **103**, and send the obtained data to the other observers **103** and the balloting organizer **104** to create equal conditions in the processing of the ballots of the voters **101** during the voting process.

In yet another variant embodiment of the system, the observer registration module **113** forms, for each observer **103**, the public and private keys as follows. The observer registration module **113** generates a random prime number $q \in Z$ is generated, where Z is the space of prime numbers. The observer registration module **113** selects an integer $g$, being the primitive root of $q$; and a random integer $s = Z_q$ is selected, such that $1 < s < q$. The observer registration module **113** then computes $h = g^s \bmod q$, wherein the public key is the set $(q, g, h)$, and the private key is the number s or the set $(q, g, s)$.

For example, the observer **103** for participation in the balloting being organized by the balloting organizer **104** first sends to it the contact data where the balloting organizer 104 may send the ballots cast by the voters **101**. For example, the observer 103 may send to the organizer 104 the addresses of the servers on which the decentralized register of records is being processed. The observer **103** for participation in the balloting being organized by the balloting organizer **104** may further send its identification data, which will be used afterwards for identification of the observer **103** in the system for counting the votes collected by means of electronic balloting.

In one variant embodiment of the system, the unified balloting key is created according to the following technique. In some examples, each observer 103 may generate a certain polynomial using some set of random numbers Cj. One number within the set of random numbers (Co) is the private key generated as discussed above. The observer j creates a private key (that is, the private key is known only to themselves), as a result they have on their hands a polynomial Pj(x) whose value for candidate X is the public key of the observer j. Based on the values of $P_j$ (x) for all observers, the observer j calculates a unified voting key. It is noted that each observer independently calculates the unified voting key, but as a result of the above described process, all the computed unified voting keys should coincide.

In one implementation, each observer **103** $A_i$ forms the polynomial $P_i$ (i.e., calculates the coefficients $C_{(i,j)}$) represented by Equation (1) below.

$$P_i(x) = C_{(i,0)} + \sum_{j=1}^{N} C_{(i,j)} \times x^j \qquad (1),$$

where N is the total number of observers **103**; $C_{(i,j)}$ are the coefficients of the polynomial, being random numbers calculated by the observer **103** $A_i$; $C_{(i,0)}$ is a coefficient of the polynomial, being the private key calculated by the observer **103** $A_i$ and used in the closed system of electronic balloting. For each observer **103** $A_k$, $k \in (0, N]$, the value of the formed polynomial is calculated at $x = k$, as in Equation (2) below.

$$P_{(j,k)} = P_j(k) \qquad (2)$$

All the observers **103** exchange among themselves the calculated values of the formed polynomials $P_{(j,k)}$, such that each observer **103** $A_k$ becomes the owner of a set of values of the polynomials $\{P_j(k)\}$, $j \in (0, N]$. Each observer **103** $A_k$ on the basis of their calculated private key $C_{(i,0)}$ and the set of values of the polynomial $\{P_j(k)\}$ calculates the common balloting key (i.e., unified balloting key), being the public key used in the closed system of electronic balloting.

The vote casting module **120** (also referred to herein as a ballot casting module) runs on the computing device of the voter **101** and may be configured to cast the ballot of the voter **101** based on data as to the choice of the voter **101**, including encryption of the ballot being cast by the voter **101** with the unified balloting key. The vote casting module **120** may be further configured to send the ballot cast to the ballot registration module **130** of at least one observer **103**. In some examples, the data on the choice of the voter **101** is the identifier of at least one candidate **102**.

In one example, the vote casting module **120** when casting the ballot of the voter **101** is additionally configured to perform, in succession: the encryption of the data on the choice of the voter **101** by the unified balloting key, and the signing of the encrypted data on the choice of the voter **101** with the digital voter **101** signature. In some examples, for the encryption of the candidate **102** identifier one uses the ElGamal scheme, the Merkel-Hellman cryptosystem, and the Rabin cryptosystem.

In yet another variant embodiment of the system, before casting the ballot of the voter **101** there is a determination (for example, by querying the balloting organizer **104**) as to whether the ballot cast by the voter **101** will be used afterwards during the counting of the votes of the voters **101**. For example, the ballot cast by the voter **101** will not be counted if the current balloting for the voter **101** is a repeat balloting, and the voter **101** is not entitled to vote again. In another example, the ballot cast by the voter **101** will not be counted if the voter **101** has chosen a nonexistent candidate **102**.

In yet another variant embodiment of the system, the casting of the ballot of the voter **101** is done by encrypting data $M$ describing the choice of the voter **101** as follows. One determines $M$ as the identifier of the candidate **102** chosen by the voter **101**, and representing a prime number, where $M < q$ ($q$ being a random prime number chosen by the balloting organizer **104**). One selects a session key - a random integer $\alpha$, such that $1 < \alpha < q - 1$. One computes the numbers $x = g^\alpha \ mod \ q$, $y = h^\alpha \ M \ mod \ q$ (where $g$ is the primitive root of $q$). The obtained set $(x, y)$ is the ballot cast by the voter **101**, where the length of the cast ballot in the ElGamal scheme is twice as long as the candidate **102** identifier $M$.

In yet another variant embodiment of the system, after the ballot of the voter **101** has been cast, vote casting module **120** sends the ballot for subsequent counting to the ballot registration module **130**, running on one of the servers used by the observers **103** or the balloting organizer **104**. In one example, the choice of which server is made by the voter **101** themselves. For example, the voter **101** may choose the server of an observer **103** trusted by them, for example, the observer **103** of the candidate **102** for whom the voter **101** is voting. In another example, the choice of which server is made automatically, by the ballot casting module **120** (for example, a less busy server or a server with the fastest response).

In yet another variant embodiment of the system, the ballot casting module **120** can send the ballot cast by the voter **101** to all accessible ballot registration modules **130**, wherein the ballot registration modules **130** themselves may provide to the ballot casting module **120** the list of servers where the ballot cast by the voter **101** can be sent.

For example, initially only one server might be available to the voter **101** (i.e., the ballot casting module **120** running on the computing device of the voter **101**). The address of this server might have been previously specified in the software installed on the computing system of the voter **101** and configured for electronic balloting. This server may be the server of the balloting organizer **104**. However, there are also another 10 observers **103** taking part in the balloting organization, each of which has access to at least one address of a server of one of the observers **103**, as well as the balloting organizer **104**, and all of them together with the balloting organizer **104** and all the observers **103** have access to the addresses of all the servers. When the ballot casting module **120** sends the ballot cast by the voter **101** to the balloting organizer **104**, the latter in turn sends to the ballot casting module **120** the addresses known to the balloting organizer **104** of the servers of the observers **103** to which the ballot casting module **120** should likewise send the ballot cast by the voter **101**. Upon sending the ballot cast by the voter **101** to said servers of the observers **103**, the ballot casting module **120** also, as before, receives from them a list of addresses of servers, known to said observers **103**, to which the ballot cast by the voter **101** also needs to be sent. This process may repeat until the ballot casting module **120** has sent the ballot cast by the voter **101** to all known servers (or substantially all) of the observers **103**.

In yet another example, after the start of the balloting, the voter **101** has an opportunity by using their voter **101** device to select one of the candidates **102**. After confirming the choice, the identifier of the selected candidate **102** is determined and encrypted by the unified balloting key obtained by the voter **101** on their voter **101** device from the balloting organizer **104** before the start of the balloting. The encrypted identifier of the candidate **102** is signed by the digital voter **101** signature, obtained from the balloting organizer after the registration of that voter **101**. The data received constitutes the ballot cast, which is sent to the ballot registration module **130**.

The ballot registration module **130** runs on the computing device of the observer **103** and may be configured to modify the decentralized register of records to take into account the obtained ballot of the voter **101**, and send the mentioned decentralized register of records to the vote counting module **140** after the balloting is finished. In some examples, ballot registration module **130** may modify the decentralized register of records according to a rule represented by Equation (3) below.

$$ P = (P \times V) \ mod \ q \quad (3) $$

where $P$ is the content of the decentralized register of records, representing a natural number, $V$ is the vote cast by the voter, representing a natural number, and $q$ is a predetermined coefficient limiting the size of the content of the decentralized register of records.

In one variant embodiment of the system, the ballot registration module **130** may be further configured to modify the decentralized register of records by taking into account the ballot cast by the voter **101** after successful verification of the authenticity of the ballot cast by the voter **101**. The authenticity of the ballot cast by the voter **101** may be recognized in the event that the digital signature used in casting the ballot of the voter **101** corresponds to the digital signature created by the voter registration module **111**, and the candidate **102** identifier used in casting the ballot of the voter **101** corresponds to the created candidate **102** identifier.

In yet another variant embodiment of the system, the ballot registration module **130** is configured for synchronous modification of all decentralized registers of records so that all ballots cast by the voters **101** take part in the modification of the decentralized register of records.

In yet another variant embodiment of the system, the authenticity of the ballot cast by the voter **101** is recognized in the event that the digital signature used in casting the ballot of the voter **101** corresponds to the digital signature created by the observer registration module **113**, and the candidate **102** identifier used in casting the ballot of the voter **101** corresponds to the candidate **102** identifier created by the voter registration module **111**.

In yet another variant embodiment of the system, the authenticity of the ballot cast by the voter **101** is verified as described below. In order to make a verification of the ballot cast by the voter **101** on the observer **103** side, the condition must be fulfilled by the relationships represented by Equations (4) below:

$$log_g x = log_h(y \times G_1),$$

$$\dots$$

$$log_g x = log_h(y \times G_k), \qquad (4)$$

where $v_k \in Z_f$ are the possible balloting variants (total of $k$ variants), a balloting variant constituting a candidate **102** identifier (thus, there are a total of $k$ candidates **102** taking part in the balloting), and $G_k$ out of $Z_f$ are the multiplicative inverses of each prime number $v_k$, such that:

$$G_k = v_k^{-1} \bmod q \qquad (5)$$

On the voter **101** side, the ballot is cast. One selects the session encryption key $\alpha$, the random number $\omega$, and also the set of random numbers $r[k]$ and $d[k]$. One composes the ballot of the voter **101** as represented in Equation (6):

$$vote = ((x, y), (a, b, d, r, m)_1 \dots (a, b, d, r, m)_n), \qquad (6)$$

being a set of numbers (in other words, a vector of dimension $2 + 4 \times n$), such that the values of x and y are calculated based on the relationships below.

$$x = g^{\alpha} \qquad (7)$$

$$y = h^{\alpha} M \qquad (8)$$

And, in a cycle, each element *vote* is composed as follows. If the $k$-th element is equal to the choice of the voter **101**, then:

$$a_k = g^w \bmod q \qquad (9)$$

$$b_k = h^w \bmod q \qquad (10)$$

$$c = hash(vote_0) \qquad (11)$$

where $vote_0$ is a vector of the ballots cast without accounting for *d, r, m*, and:

$$d_k = c - \sum_i d_i \qquad (12)$$

$$r_k = w - \alpha d_k \qquad (13)$$

$$m_k = G_k \qquad (14)$$

where $m_k$ is the element *vote.* Otherwise, if the *k*-th element is not equal to the choice of the voter **101**, then the values of a, b, m may be determined as follows:

$$a_k = (g^{r_k}) \times (x^{d_k}) \qquad (15)$$

$$b_k = h^{r_k} \times (y \times G_k)^{d_k} \qquad (16)$$

$$m_k = G_k \qquad (17)$$

where $m_k$ is the element *vote.*
On the observer **103** side, a verification is done for the ballot cast by the voter 101 and received from the voter **101**. The verification may involve a verification of the fulfillment of the following identities, for all *k*:

$$\sum_i d_i \equiv hash(vote_0) \qquad (18)$$

$$a_k \equiv (g^{r_k}) \times (x^{d_k}) \qquad (19)$$

$$b_k \equiv h^{r_k} \times (y \times m_k)^{d_k} \qquad (20)$$

In yet another variant embodiment of the system, the modification of the decentralized register of records taking into account the ballot cast by the voter **101** is calculated by the formula represented in Equation (21) below.

$$P = (P \times V) \, mod \, q \qquad (21)$$

where *P* is the content of the decentralized register of records, representing a natural number; *V* is the vote cast by the voter, representing a natural number; and *q* is a predetermined coefficient limiting the size of the content of the decentralized register of records.
In yet another variant embodiment of the system, at least two decentralized registers of records are formed, and afterwards all decentralized registers of records are modified synchronously, such that all ballots cast by the voters **101** are included in the modification of the decentralized registers of records.
In yet another variant embodiment of the system, the ballot registration module **130** may run on the device of the balloting organizer **104**. In this case, the balloting organizer **104** is also an observer **103** and for the voter **101**, the means of casting the ballot of the voter **101**, and also the other observers **103** the balloting organizer **104** will be formally identical in functionality to the observers **103**.
In yet another variant embodiment of the system, after obtaining the ballot cast by the voter **101**, the ballot registration module **130** running on the device of one observer **103** may send the received ballot cast by the voter **101** to the ballot registration module **130** running on the device of another observer **103**, while the ballot registration module **130** themselves may provide to the ballot casting module **120** the list of servers where the ballot cast by the voter **101** may be sent.
In one exemplary scenario, ten observers **103** are participating in the balloting. Each observer **103** (i.e., the ballot registration module **130** running on the computing device of the observer **103**) knows at least the address of the server of another observer **103**, while all observers **103** together know the addresses of all servers of all observers **103** on which are running all of the ballot registration module **130**. Responsive to receiving a ballot cast by a voter **101** from the ballot casting module **120**, the ballot registration module **130** will in turn send the obtained ballot cast by the voter **101** to the other ballot registration module **130** at the servers with the known addresses. Upon sending the ballot cast by the voter **101** to the mentioned servers of the observers **103**, the ballot registration module **130** receives from them a list of server addresses known to those observers **103** where the ballot cast by the voter **101** also needs to be sent. This repeats until such time as the ballot registration module **130** has sent the ballot cast by the voter **101** to all known servers of the observers **103**.

The vote counting module **140** may run on the computing device of the balloting organizer **104** and may be configured to verify the authenticity of the decentralized registers of records and decrypt data on the ballots cast by the voters **101** in the decentralized register of records. The data on the ballots cast by the voters may be decrypted if the result of the aforementioned verification of the decentralized registers of records is positive and is performed using at least one private key previously created by the observer registration module **113**. The vote counting module **140** may be configured to, based on the decrypted data on the ballots cast by the voters **101**, calculate the number of ballots of the voters **101** cast for each of the candidates **102**.

In one variant embodiment of the system, the vote counting module **140** may be further configured to verify the authenticity of the decentralized registers of records by means of a byte by byte comparison of at least two decentralized registers of records. In one variant embodiment of the system, the completion of the balloting occurs when at least one criterion predetermined by the balloting organizer **104** is fulfilled. Examples of the criterion may include the duration of the balloting has passed a predetermined value, the number of ballots has passed a predetermined value; or the number of unsuccessful verifications of the authenticity of the ballot cast by a voter **101** has passed a predetermined value. In yet another variant embodiment of the system, the calculation of the number of ballots in the event of using the ElGamal cryptosystem to calculate (factorialize) the number of ballots cast by the voters **101** employs the Shanks algorithm.

### _Example: Vote Collection for Presidential Elections_

The following disclosure presents an example working of the system for counting votes collected with the use of an electronic balloting system in the example of conducting presidential elections in Country X. An election commission has been created to handle organizational matters, as well as to prepare for and carry out these elections.

Three candidates are taking part in the presidential elections, representing 3 out of 5 political parties of the country, while the election commission has entered 15,000,000 voters on the election lists (representing the entire population of the country entitled to vote), and 5 observers **103** (one from each political party) have been registered with the election commission to monitor the course of the balloting. The election commission has established a period for holding the elections (01 Jan 2017 10:00 a.m. to 02 Jan 2017 8:00 p.m.), during which time the voters **101** can vote for one of the three candidates participating in the elections. At the end of this period, there will be a counting of the votes cast for each candidate, and the winner of the presidential elections will be determined.

The electronic elections consist of three main steps: (1) preparation for the start of the voting; (2) the actual voting itself, i.e., the collecting and counting of the votes of the voters **101**; and (3) summing up the voting results.

### _Step 1: Preparation for the start of voting_

Prior to the start of voting (prior to the time established by the election commission: 01 Jan 2017 10:00 a.m.) the following occurs: (1.1) the registration of candidates **102**, during which data are created which will be used by the voters **101** during the holding of the balloting to cast the ballots of the voters **101**; (1.2) the registration of observers **103**, during which data are created which will be used during the holding of the balloting for the collecting and counting of the ballots of the voters **101**; and (1.3) the registration of voters **101**, during which information on the candidates **102** and the observers **103** is provided to the voters **101** from the election lists, which will be used by the voters **101** during the holding of the balloting to cast and transmit the ballots of the voters **101**.

### _1.1: Registration of candidates_

For each candidate **102** participating in the elections, the election commission creates their own candidate **102** identifier, representing a natural number. For example, the following identifiers may be assigned:

candidate #1 → 31,

candidate #2 → 83,

candidate #3 → 101.

The candidate **102** identifier is created by random selection of a number in a predetermined range of values [2, 127]. The upper limit of the range of values ($q$ = 127, known as the base of the cryptosystem) is chosen in advance for reasons of mathematical expediency (i.e., a value is chosen for which, given the known number of candidates **102** and voters **101**, the calculation of an unambiguous result after adding up the ballots of the voters **101** is guaranteed) and used in the mathematical computations in the course of the balloting.

*1.2: Registration of observers*

One of the observers **103** is the election commission. The election commission **104** previously establishes that a minimum of 3 out of 5 observers **103** are needed for the decrypting of the ballots of the voters **101** collected in the balloting process. These values are chosen from the statistics of holding previous balloting, the identification data of the observers **103**, and so forth, so that it is possible to complete the balloting (i.e., calculate the results of the balloting) even if some observers **103** may make mistakes in counting the ballots of the voters **101**. For example, in the above-described example, 2 out of 5 observers may make mistakes in the counting of the ballots of the voters **101** (for example, falsifying the ballots of the voter **101**). If a larger number of observers were chosen (such as 3 or 4) who might make mistakes, then the balloting may be falsified (the majority of observers might falsify the balloting according to a plan).

Each registered observer **103** previously creates a public and a private key to be used in an asymmetrical encryption system and sends to the election commission their individual observer **103** characteristics. Their individual observer **103** characteristics may include the created public key, as well as the address of their server, which will be used during the holding of the electronic balloting to exchange data with other observers **103** and voters **101** (for example, election-monitor.com:1200). Each registered observer **103** receives from the election commission or any other registered observer **103** the individual characteristics of the other registered observers **103**, and also its own observer **103** identifier. Its own observer identifier may be, for example, a serial number under which the observer **103** is registered by the election commission or any other natural number chosen by the election commission **104** at random. Thus, after completing the registration of observers **103**, each observer **103** has the individual characteristics of, at minimum, one other observer **103**. Meanwhile, all the observers **103** together have the individual characteristics of all the registered observers **103**, thereby making it possible to exchange data between observers **103**. As such, the data transmitted from one observer **103** to another, via consecutive transmission from observer **103** to observer **103**, is present at all registered observers **103**.

Each registered observer **103** may formulate the polynomial represented by Equation (22).

$$P(x) = C_0 + \sum_{i=1}^{3} C_i \times x^i \qquad (22)$$

where:

$P(x)$ - is the formulated polynomial, the degree of the polynomial corresponding to the number of observers **103**, chosen by the election commission, which are needed to decrypt the ballots of the voters **101** collected during the balloting process (in the present example, 5),

$C_0$ - is the private key created, being a natural number;

$C_i$ - are the coefficients of the polynomial, being integers, the numbers being chosen so as to fulfill the condition represented by Equation (23) below:

$$P(x) \in (0, q), \forall x, x \in \mathbb{N}, x \in \{x_i\} \quad (23)$$

where:

$q$ - is the predetermined base of the cryptosystem, being a prime number, for example, $q \in M_p$, where $M_p$ is the Mersenne number (a prime number of the kind $2^n - 1$) (for the present example, $q = 127$);

$\{x_i\}$ - is the set of identifiers of all registered observers **103**; for example, the set of identifiers may be as seen in Equation (24) below:

$$C_i = \begin{Bmatrix} 1232217802219824000, \\ 578140416000, \\ 596366064000, \\ 99120672000 \end{Bmatrix} \qquad (24)$$

where $C_i$ represents a set of 4 numbers, since 5 observers are participating in the balloting, for 4 of which we count the fifth ($i$) as $C_i$.

For each of the 5 observers **103** (including itself), the observer computes the value of the formulated polynomial *P(x)* at point $x \in \{x_i\}$ and sends the computed value to the corresponding observers **103**. Thus, after completing the registration of the observers **103**, each observer **103** has 5 values of polynomials created by the observers **103**. On the basis of the values of the polynomial computed for all the observers **103**, the observer registration module **113** computes the private key and sends it to all the observers **103**, as in the example Equation (25) below.

$$Sc = g^{secret} \ mod \ q = \ g^{\Sigma_i^5 P(i)} \ mod \ q \qquad (25)$$

With the aid of all 5 available public keys, it creates the unified balloting key, as shown in Equation (26) below.

$$H = \prod_{i=1}^{5}\big(g^{S_o(i)} \ mod \ q\big) \qquad (26)$$

where *g* is the predetermined primitive root; $S_o(i)$ is the public key created by the observer **103** *i*, being a natural number; and *q* is the predetermined base of the cryptosystem.

In conclusion, on the basis of the previously obtained *Sc*, from the other values of the polynomials {*P(x)*}, the created public key *H* is checked for correctness, i.e., it will be possible afterwards to decrypt the collected ballots of the voters **101** with the obtained unified public key.

### 1.3: Voter registration

Each voter **101** who intends to vote in the upcoming elections connects with the aid of specialized software to the online service of the election commission and/or any other observer **103** whom they trust. For example, members of the party Y will use the online service of the observer **103** from their party Y. From the online service, the voter **101** is sent data containing information on the candidates **102** (including their candidate **102** identifiers), the unified balloting key *H* created (computed); and the balloting characteristics, including the period for holding the balloting.

### Step 2: Voting

With the onset of the time established by the election commission for the start of voting, the voters **101** have an opportunity to cast voter **101** ballots and send them to their observers **103**, while the observers **103** have an opportunity to keep track of the ballots of the voters **101** and exchange them. During the voting, there occurs: (2.1) a casting of ballots of the voters **101**, (2.2) a verification of the ballots cast by the voters **101**, and (2.3) a counting of the verified ballots of the voters **101**.

### 2.1: Casting of ballots of the voters

The voter **101**, using software running on their computing device (personal computer, smartphone, and so on), selects a candidate **102** for whom they wish to cast a vote. After the choice has been made, the ballot of the voter **101** is cast, for which the following steps may be performed. The ballot casting module 120 encrypts the candidate **102** identifier corresponding to the chosen candidate **102** with the unified balloting key *H*, obtained from one of the observers **103** in the voter **101** registration stage. The choice by the user **101** of the candidate **102** identifier for casting the ballot of the voter **101** is the casting of their voter **101** ballot for the chosen candidate **102**. The ballot casting module 120 signs the encrypted candidate **102** identifier with the digital voter **101** signature. The ballot casting module 120 sends the ballot to the online service of the chosen observer **103**.

### 2.2: Verification of the cast ballot

After one of the observers **103** receives the voter **101** ballot cast in step 2.1, they perform a verification of the received ballot to make sure that (i) the ballot belongs to a voter **101** who is entitled to participate in the mentioned elections; (ii) that voter **101** has not previously voted in those elections; (iii) the vote has been cast for a candidate **102** participating in those elections.

### 2.3 Counting of verified ballots:

After all the verifications performed in steps 2.1 and 2.2, the ballot cast by the inventor is counted by each observer **103**, for which the ballot registration module **130** modifies the decentralized registers of records by taking account of the ballots cast by the voters **101** such that the decentralized register of records begins to contain the ballots cast by the voters **101**. The actual modification of the decentralized registers of records is done so as to keep track of and not lose the information of which candidate **102** received the vote, yet entirely losing the information of who voted for which candidate **102**. In a particular embodiment of the system, this may be represented in the form shown in Equation (27):

$$P_i = (P_{i-1} \times V_i) \, mod \, q \quad (27)$$

where

$P_i$ is the content of the decentralized register of records after the *i*-th modification,

$V_i$ is the vote cast by the *i*-th voter **101**,

$q$ is a predetermined coefficient limiting the size of the content of the decentralized register of records.

In other words, the final decentralized register of records (after completion of the course of balloting) will look like the Equation (28):

$$P_i = P_0 \times \prod_{i=1}^{n} (V_i \, mod \, q) \quad (28)$$

where

$P_0$    - is the initial content of the decentralized register of records before making the modifications taking account of the ballots cast by the voters **101**,

$V_i$    - is the vote cast by the *i*-th voter **101**,

$n$    - is the number of ballots cast by the voters **101** (in essence, the number of voters **101** having voted),

$q$    is a predetermined coefficient limiting the size of the content of the decentralized register of records.

*3: Summing up the results of the voting:*

After the period of time devoted by the election commission to the balloting has expired (or when all potential voters **101** have successfully voted), the collection of the ballots cast by the voters **101** is halted. The procedure of verification of the ballots of the voters **101** and the determination of the final results of the voting commences.
During the summing up of the results of the voting, there occurs: (3.1) a verification of the correctness of the collected ballots of the voters **101** for each observer **103**, and (3.2) a determination of the number of votes collected for each candidate **102**.

*3.1: Verification of the correctness of the ballots cast by the voters for each candidate:*

At this stage, a determination is made as to whether the ballots have been correctly collected by the different observers **103**. For this, a comparison is done between the data gathered by each observer **103** containing the encrypted ballots of the voters **101**. In the ideal situation, this data should match up; if this is not the case, it means that a certain observer **103** has incorrectly processed the ballots cast by the observers **103** and arriving at that observer (for example, certain votes were not counted or votes were replaced). The data of this observer **103** is ignored in the subsequent vote counting. If such observers **103** are in the majority, the elections are considered null and void, and the ballots of the voters **101** are not considered at all.

*3.2: Determination of the number of votes collected for each candidate:*

At this stage, when it is already known that the elections have occurred successfully, the anonymized ballots of the voters **101** are extracted from the data received by one of the observers **103** (any one of the observers **103**, since their data matches up) in the form shown in Equation (29):

$$V_k = \sum_i v_i \qquad (29)$$

where $V_k$ - is the number of ballots cast for the *k*-th candidate, where the ballots of specific voters **101** $v_i$ cannot be obtained directly from the data gathered by the observer **103** in the course of the balloting, since that information has been lost in the course of the data gathering. Thus, a closed (secret) system of electronic balloting is realized.

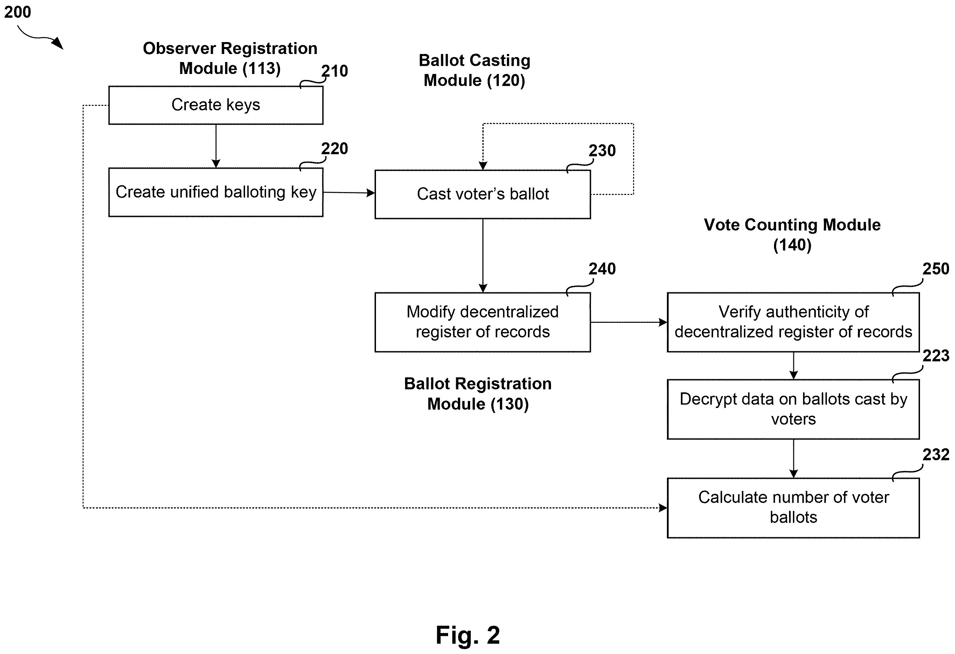

**Figure 2** is a flowchart illustrating a method **200** for determining the number of votes collected by means of electronic balloting.

The structural diagram of the method **200** for determining the number of ballots of voters collected by means of electronic balloting includes the following steps: step **210**, in which the keys are created, step **220**, in which the unified balloting key is created, step **230**, in which the ballot of the voter is cast, step **240**, in which the decentralized register of records is modified, step **250**, in which the authenticity of the decentralized registers of records is verified, step **260**, in which data on the ballots cast by the voters is decrypted, step **270**, in which the number of ballots of the voters is calculated.

In step **210** the observer registration module **113** is used to create for each observer **103** on the basis of the identification data obtained from the observer **103**: (i) a public key to be used for encrypting the ballot of the voter **101**, and a private key to be used for decrypting the ballot of the voter **101**; and (ii) a decentralized register of records, which will be modified to keep track of the ballots cast and received by the observer **103** from the voters **101**.

In step **220** the observer registration module **113** is used to create a unified balloting key on the basis of the public keys of all observers **103** created in step **210**.

In step **230** the ballot casting module **120** is used to cast a ballot for each voter **101** on the basis of data on the choice of the voter **101**, including the encrypting of each voter **101** ballot being cast by the unified balloting key.

In step **240** the ballot registration module **130** is used to modify the decentralized register of records taking into account the ballot cast by the voter **101**.

In step **250** the vote counting module **140** is used to verify the authenticity of the decentralized registers of records.

In step **260**, if the verification performed during step **250** has a positive result, the vote counting module **140** is used to decrypt the decentralized registers of records using at least one private key created during step **210** of the data on the voter **101** ballots cast in the decentralized register of records.

In step **270**, on the basis of the data decrypted in step **260** on the ballots cast, the vote counting module **140** is used to calculate the number of ballots cast by the voters **101** for each candidate **102**.

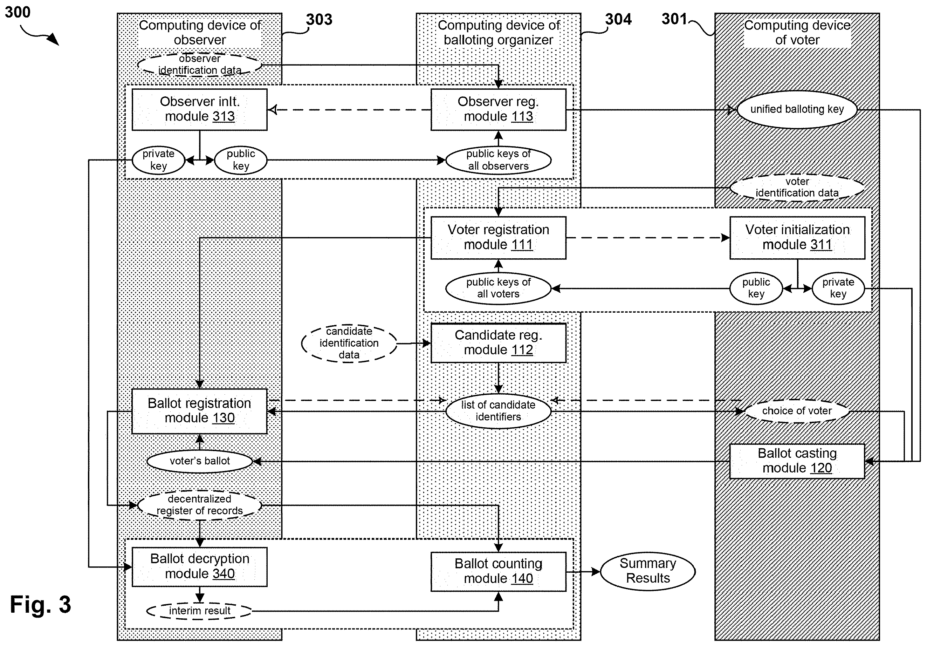

**Figure 3** is a block diagram of a particular embodiment of the system **300** for counting votes by means of electronic balloting.

The structural diagram of data relations with the system **300** for determining the number of ballots of voters collected with the aid of electronic balloting includes a computing device of a voter **301** having a voter initialization module **311** and the vote casting module **120**, a computing device of an observer **303** having an observer initialization module **313**, the ballot registration module **130** and ballot decryption module **340**, a computing device of the balloting organizer **304** having the observer registration module **113**, the voter registration module **111,** the candidate registration module **112**, and the vote counting module **140**.

In one variant embodiment of the system, a threshold cryptosystem (*n,k*) is used, characterized in that, for the decryption of a ballot of a voter **101**, encrypted with the use of public keys *n* of observers **103**, it is sufficient to use private keys of at least *k* observers **103**, i.e.

$$n > 1,$$

$$1 \le k < n,$$

where:

$n$ - is the total number of observers **103**,

$k$ - is the minimum number of observers **103** needed to decrypt the ballots of the voters **101**.

The voter initialization module **311**, running on the computing device of the voter **301**, and the voter registration module **111**, running on the computing device of the balloting organizer **304**, may be a client-server architecture, configured to register the voter **101** in the system for determining the number of ballots of the voters **101** collected with the aid of electronic balloting. The following steps are performed during the registration of the voter **101**. The user who intends to take part as a voter **101** in the balloting announced by the election organizer **104** sends their identification data from their voter computing device **301** to the voter registration module **111**. Then, the voter registration module **111** on the basis of the received identification data performs a verification of the user and, if this verification is successful, sends a request to the voter initialization module **311** to complete the initialization of the voter **101**. The voter initialization module **311** creates the public and private encryption keys, sends the public key to the voter registration module **111**, and keeps the private key on the computing device of the voter **301** for use as a digital signature when casting the ballot of the voter **101** in the voting process.

After the voter initialization module **311** has created the encryption keys and sent the public key to the voter registration module **111**, the user is considered to be a registered voter **101**. In the remainder of the voting process, the private key will be used as the identifier of the voter **101**, i.e., as data uniquely determining the user during the voting organized by the balloting organizer **104**.

In one variant embodiment of the system, the verification of the user consists in determining on the basis of the identification data of the user the right of the user to take part as a voter **101** in the balloting announced by the election organizer **104**.

For example, even before organizing the actual balloting, the balloting organizer **104** already has access to a list of users who may register as voters **101**. In the case of presidential elections, the election commission playing the role of the balloting organizer **104** has identification data of the citizens, such as the numbers of personal identity documents, from which the election commission can verify the citizens arriving at the voting stations or using remote balloting.

In yet another variant embodiment of the system, the verification of the user includes determining, on the basis of identification data of the user, including that describing the computing device of the voter **301**, the absence of voters **101** who have been previously verified on the basis of similar identification data. The aforementioned action is aimed at avoiding situations where one and the same user may become registered from different voter computing devices **301** as different voters **101**. For example, the very same user, having attempted to register as a voter **101** from different voter computing devices **301**, will be determined as the very same user, so that they will be registered as a voter **101** only once on the first user computing device **301**, and when trying to register from a second user computing device **301** they will be denied registration by the balloting organizer **104**.

In yet another variant embodiment of the system, the user verification includes determining on the basis of the user identification data the technical possibility of participating with the use of the user's computing device **301** as a voter **101** in the balloting announced by the election organizer **104**. This action is aimed at determining several factors relating to whether the voter **101**, using the available computing devices, is able to participate in the balloting organized by the election organizer **104**. In one example, this action may determine whether the computing resources are sufficient in the voter's computing device **301** to cast the ballot of the voter **101** in the voting process (for example, is there sufficient performance, main memory, and so forth. In another example, this action is aimed at determining whether the voter's computing device **301** meets the requirements of information security (e.g., is antivirus software running on said computing device, guaranteeing an absence of malware applications on the voter's computing device **301**.) In one example, this action is further aimed at determining are the network resources enough to obtain data from the computing device of the balloting organizer **304** and to send data to the computing device of the observer **303** (e.g., is the traffic capacity and stability of the network channel to the computing devices of the balloting organizer **304** and observers **303** sufficient).

The observer initialization module **313**, running on the computing device of the observer **303**, and the observer registration module **113**, running on the computing device of the balloting organizer **304**, may be a client-server architecture, configured to register the observer **103** in the system for determining the number of ballots of the voters **101** collected with the aid of electronic balloting. The following steps are performed during the registration of the observer **103**. The user who intends to take part as an observer **103** in the balloting announced by the election organizer **104** sends their identification data from their observer **303** computing device to the observer registration module **113**. The observer registration module **113** on the basis of the received observer **103** identification data performs a verification of the user and, if this verification is successful, sends a request to the observer initialization module **313** to complete the initialization of the observer **103**. The observer initialization module **313** creates the public and private keys, sends the public key to the observer registration module **113**, and keeps the private key on the computing device of the observer **303** for use during the decryption of the ballots cast by the voters **101**, which will be obtained by the observer **103** from the voters **101** in the balloting process. The observer registration module **113** verifies the correctness of the public and private key created by said user and in event of a successful verification the user becomes a registered observer **103**.

In one variant embodiment of the system, the user verification includes determining on the basis of the identification data of the user the right of the user to participate as an observer **103** in the balloting announced by the election organizer **104**.

For example, even before organizing the actual balloting, the balloting organizer **104** already has access to a list of users who may register as observers **103** (in the case of presidential elections, the election commission playing the role of the balloting organizer **104** has identification data of the citizens, such as the numbers of personal identity documents, from which the election commission can verify the users taking part in the balloting as observers **103**, having access to the obtained ballots of the voters).

In yet another variant embodiment of the system, the verification of the user includes determining, on the basis of identification data of the user, including that describing the computing device of the observer **303**, the absence of observers **103** who have been previously verified on the basis of similar identification data.

The aforementioned action is aimed at avoiding situations where one and the same user may become registered from different observer **303** computing devices as different observers **103**. For example, the very same user, having attempted to register as an observer **103** from different observer **303** computing devices, will be determined as the very same user, so that they will be registered as an observer **103** only once on the first observer **303** computing device, and when trying to register from a second observer **303** computing device they will be denied registration by the balloting organizer **104**.

In yet another variant embodiment of the system, the user verification includes determining on the basis of the user identification data the technical possibility of participating with the use of the observer's **303** computing device as an observer **103** in the balloting announced by the election organizer **104**. This action is aimed at determining several factors for determining whether the observer **103** is "technically" able to participate in the balloting organized by the election organizer **104**. In some examples, determining the technical possibility of participation with the observer's computing devices includes determining whether the computing resources are sufficient in the computing device of the observer **303** to create the data used in casting the ballot of the voter **101** and register the ballot cast by the voter **101** in the balloting process (for example, is there sufficient performance, main memory, and so forth). In another example, determining the technical possibility of participation with the observer's computing devices includes determining does the computing device of the observer **303** meet the requirements of information security (for example, is antivirus software running on said computing device, guaranteeing an absence of malware applications on the computing device of the observer **303**). In another example, determining the technical possibility of participation with the observer's computing devices further includes determining are the network resources enough to obtain data from the computing device of the balloting organizer **304** and the computing devices of the voters **301** (for example, is the traffic capacity and stability of the network channel to the computing devices of the balloting organizer **304** and voters **301** sufficient).

In yet another variant embodiment of the system, the initialization of observers 103 is done as follows. The observer initialization module **313** of each observer $P_i$ creates the polynomial $F_i(x)$, for which it assigns the coefficients $f_{ij}$ of the polynomial $F(x)$ of degree $k$ - 1, the set of created coefficients of the polynomial $f_{ij}$ forming the private key of the observer **103** $P_i$. The private key of the observer may be used as the basis for a common decryption key used to decrypt the (encrypted) ballots cast by voters. In one implementation, the observer initialization module **313** may calculate the polynomials according to Equation (30), provided below.

$$F_i(x) = \sum_{j=0}^{k-1} f_{ij} \times x^j \qquad (30)$$

$i \in [1..n]$,
$k \in [1..n)$,
$$f_{ij} \in \mathbb{R}$$

where:

$F_i(x)$    - is the polynomial created,

$f_{ij}$        - are the coefficients of the polynomial $F_i(x)$,

$f_{io} = s_i$    - is a free term of the polynomial $F_i(x)$,

*n*        - is the total number of observers **103**,

*k*        - is the minimum number of observers **103** needed to decrypt the ballots of the voters **101**;

For each observer **103** $P_j$ (including the observer **103** itself $P_i$) the observer initialization module **313** computes the value of the polynomial $F_i(j)$, sends the computed values of the polynomial $F_i(j)$ to the observer **103** $P_j$, and computes on the basis of the free term of the polynomial $F_i(x)$ according to the formula in Equation (31) the value:

$$a_i = g^{s_i} \quad (31)$$

where:

*g*     - is the primitive root of *q,*

$s_i$     - is the free term of the polynomial $F_i(x)$

and the computed value $a_i$ forms the public key of the observer **103** $P_i$. The observer initialization module **313** sends the formulated public key of the observer **103** $P_i$ to the observer registration module **113**. In one variant embodiment of the system, the coefficients $f_{ij}$ of the polynomial $F_i(x)$ can be assigned with the aid of a random number generator.
The observer registration module **113** computes the unified balloting key on the basis of the public keys of the observers **103** $P_i$ by the formula shown in Equation (32).

$$h = \prod_{i=1}^{n} a_i = \prod_{i=1}^{n} g^{s_i} \qquad (32)$$

The observer registration module **113** computes a common decryption key on the basis of the free terms of the polynomials received $F_i(x)$. The observer registration module **113** verifies the correctness of the public and private keys of each observer **103** $P_i$, for which it checks whether the observer initialization module **313** of the observer **103** $P_i$ has correctly computed the values of the polynomial $F_i(j)$. In other words, the observer registration module **113** checks whether a respective observer used for the formation of the public key of the observer **103** $P_i$ is the solution of the polynomial $F_i(x)$. This verification therefore determines whether the unified balloting key and the common decryption key have been correctly computed.
In some examples, the observer registration module **113** may carry out the following steps in the verification. Firstly, the observer initialization module **313** of each observer **103** $P_i$ computes and sends to the observer registration module **113** the values shown in Equation (33)

$$S_{ij} = g^{f_{ij}} \quad (33)$$

where:

*g*     - is the primitive root of *q,*
$f_{ij}$     - are the coefficients of the polynomial $F_i(x)$, created by the observer initialization module **313** by the observer **103** $P_i$,

The observer registration module **113** verifies that the observer initialization module **313** of the observer **103** $P_i$ has indeed computed $F_i(j)$, by using the created coefficients of the polynomial $f_{ij}$ for which it checks to make sure the equality shown in Equation (34) is fulfilled.

$$g^{f_{ij}} = \prod_{l=0}^{k-1} S_{ij}^{i^l} \qquad (34)$$

The observer registration module **113** verifies that the computed public key of the observer **103** $P_i$ corresponds to the coefficients of the polynomial $f_{ij}$ received by the observer registration module **113** and created by the observer initialization module **313** of the observer **103** $P_i$ of the polynomial $F_i(x)$, and that these coefficients of the polynomial $f_{ij}$ correspond to the computed unified balloting key, i.e.

$$\prod_{i=1}^{n} g^{s_i} = \prod_{i=1}^{n} S_{i0} = h \qquad (35)$$

for which it checks to make sure that the equality is fulfilled

$$g^{s_i} = \prod_{j=1}^{n} g^{f_{ij}} = \prod_{j=1}^{n} \left( \prod_{l=0}^{k-1} S_{ij}^{i^l} \right) \qquad (36)$$

The candidate registration module **112**, running on the computing device of the balloting organizer **304**, may be configured for registration of the candidates **102**. The registration of the candidates **102** is done as follows. The subject (such as a user) or the object intending to take part as a candidate **102** in the balloting announced by the election organizer **104** sends their identification data to the candidate registration module **112**. The candidate registration module **112** on the basis of the received identification data of the candidate **102** performs a verification of the candidate **102** and, if this verification is successful, it assigns to the candidate **102** an identifier of the candidate **102** $p$, which is saved on the computing device of the balloting organizer **304**, where the identifier of the candidate **102** is a prime number:

$$p \in \mathbb{Z}, \qquad (37)$$

$$p > 1.$$

In one variant embodiment of the system, the verification of the candidate **102** includes a determination on the basis of the identification data of the candidate **102** of the right of the subject or object to take part as a candidate **102** in the balloting announced by the election organizer **104**. The verification of the candidate **102** further includes a determination on the basis of the identification data of the candidate that there are no candidates **102** previously verified on the basis of similar identification data.

In yet another variant embodiment of the system, the identifier of the candidate **102** $p$ is selected from a list of previously computed, nonrecurring prime numbers: (i) randomly, but so that each of the selected prime numbers is chosen for only one candidate **102**; or (ii) in succession.

The ballot casting module **120**, running on the computing device of the voter **301**, casts the ballot of the voter **101** as follows. The voter **101** makes a choice of one of the candidates **102**, the data on the choice of the voter **101** being the identifier of the chosen candidate **102** $p$. The ballot casting module **120** computes the session key $\alpha$ - a numerical value used during the encryption of the ballot of the voter **101**, wherein the session key $\alpha$ is calculated again by the ballot casting means **120** each time a ballot is cast, so as to satisfy the condition:

$$\alpha \in \mathbb{R} \qquad (38)$$

$$\alpha \in (1..q-1)$$

The ballot casting module **120** encrypts the identifier of the chosen candidate **102** $p$ by the unified balloting key obtained from the observer registration module **113**, by the formula represented in Equation (39):

$$vote = \{x, y\} \qquad (39)$$

$$x = g^{\alpha}$$

$$y = h^{\alpha} p$$

where

*g*     - is the primitive root of *q,*
*h*     - is the unified encryption key obtained from the voter initialization module **311**,
*α*     - is the session key computed for the current ballot of the voter **101**.

The ballot casting module **120** signs the encrypted data with the private key obtained from the observer registration module **113**. After the vote casting module **120** finishes the casting of the ballot, it sends the ballot cast to the ballot registration module **130**.

In one variant embodiment of the system, the vote casting module **120** sends the ballot cast by the voter to the ballot registration means **130**, running on the computing device of the observer **303** selected by the voter **101** of the observer **103**. The selection of the observer **103** by the voter **101** to whose observer **303** computing device the data is sent from the user **301** computing device, is done on the basis of data provided to the voter **101** by the balloting organizer **104** (for example, the network addresses of the observer **303** computing devices).

The ballot registration module **130**, running on the observer **303** computing device, registers the ballots of the voters **101** as follows. The received ballot cast by the voter **101** is encrypted with the public key of the observer **103**. The decentralized register of records of the observer **103** who received the ballot cast by the voter **101** is modified to take into account the received ballot of the voter **101**, the modification being done according to the rule shown in Equation (4):

$$P = (P \times V) \bmod q \qquad (40)$$

where:

*P*     - is the content of the decentralized register of records, representing a natural number,
*V*     - is the vote cast by the voter, representing a natural number,
*q*     - is a predetermined coefficient limiting the size of the content of the decentralized register of records.

The ballot decryption module **340**, running on the computing device of the observer **303**, and the vote counting module **140**, running on the computing device of the balloting organizer **304**, are a client-server architecture, designed to calculate the final results of the balloting organized by the balloting organizer **104** with the aid of the system of determining the number of ballots of voters **101** collected with the aid of the electronic balloting. The following steps are performed during the decrypting of the ballots of the voters **101**. The vote counting module **140** selects at least *k* of the *n* observers **103** taking part in the balloting organized by the balloting organizer **104**. The ballot decryption module **340**, running on the computing device **303** of the previously selected observer **103**, uses the previously formed private key of the observer **103** to decrypt the decentralized register of records. The final result of the consecutive decrypting of the decentralized register of records by the ballot decryption module **340**, running on the computing devices **303** of the selected *k* observers **103**, will represent the product shown in Equation (41)

$$votes = \prod_{i=1}^{n} p_i^{v_i} \qquad (41)$$

where:

*n*     - is the number of candidates **102** taking part in the balloting organized by the balloting organizer **104**,
*P_i*     - is the candidate **102** identifier of the *i*-th candidate **102**,
*V_i*     - is the number of ballots of the voters **101** cast for the *i*-th candidate **102**.

The vote counting module **140** factorizes the decrypted decentralized register of records on the basis of the identifiers of the candidates **102** taking part in the balloting organized by the balloting organizer **104**;

In one variant embodiment of the system, the vote counting module **140** selects at least *k* out of the *n* observers **103**: (i) randomly, or (ii) in dependence on the number of ballots cast by the voters **101**, sent to the ballot registration means **130** running on the computing device **303** of a particular observer **103**. For example, the vote counting module **140** selects *k* observers **103**, to the ballot registration module **130** of which, running on the computing devices **303**, the most ballots cast by the voters **101** have been sent.

In yet another variant embodiment of the system, for the factorization of the decrypted decentralized register of records the vote counting module **140** uses the Gelfond-Shanks algorithm (baby-step giant-step).

In yet another variant embodiment of the system, after computing the number of ballots of the voters **101** cast for each of the candidates **102**, the vote counting module **140** performs a verification of the correctness of the factorization done for the decrypted decentralized register of records, for which it makes a comparison of the total number of voters **101** who have voted and the total number of ballots computed, i.e.

$$\sum_{i=1}^{n} v_i = v_{max} \qquad (42)$$

where:

$n$      - is the number of candidates **102** participating in the balloting organized by the balloting organizer **104**,
$v_i$      - is the number of ballots of the voters **101** cast for the $i$-th candidate **102**,
$v_{max}$    - is the total number of voters **101** who have voted;

In the event that the comparison shows a negative result, the results of the balloting are considered null and void.

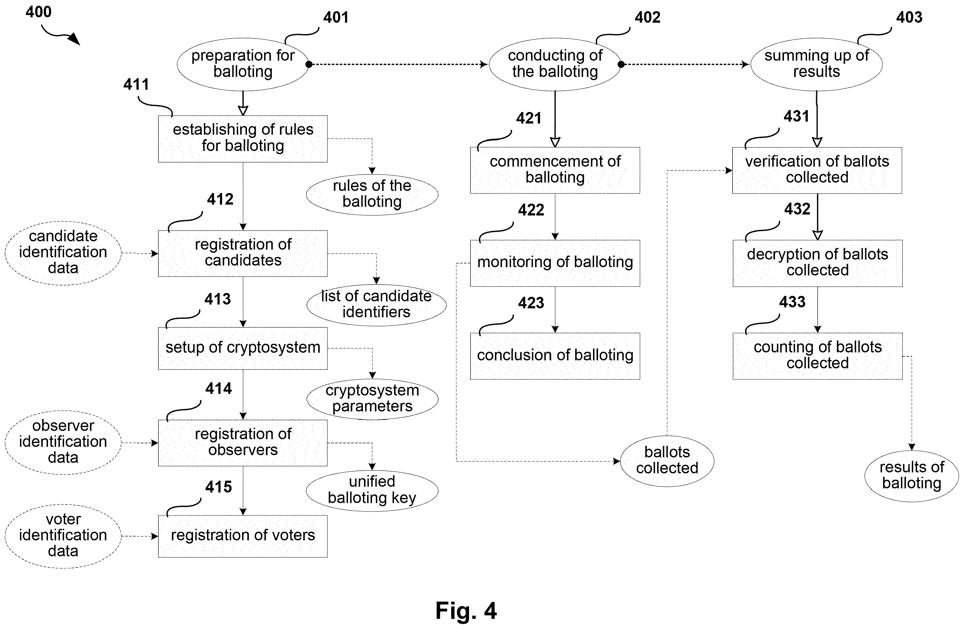

**Figure 4** is a flowchart of a particular embodiment of the method 400 of working of the balloting organizer.
The structural diagram of a particular embodiment of the method **400** of working of the balloting organizer includes the following steps: step **401**, in which the preparations for the balloting take place, step **402**, in which the balloting is carried out, step **403**, in which the results are summed up, step **401**, in turn containing step **411**, in which the rules for conducting the balloting are established, step **412**, in which the candidates are registered, step **413**, in which the cryptosystem is set up, step **414**, in which the observers are registered, step **415**, in which the voters are registered, step **402**, in turn containing step **421**, in which the balloting process is commenced, step **422**, in which the course of the balloting is monitored, step **423**, in which the balloting process is concluded, step **403**, which in turn contains step **431**, in which the collected ballots are verified, step **432**, in which the collected ballots are decrypted, and step **433**, in which the collected ballots are counted.
In step **401**, the balloting organizer **104** carries out preparations for the balloting: they assign the rules of the balloting, on the basis of which further preparations for the balloting are carried out, the balloting itself is carried out, and the ballots are counted after the balloting is finished, registration of candidates **102**, setup of the cryptosystem, whose parameters will be used for the casting, storing and counting of the ballots of the voters **101**, registration of observers **103** and registration of voters **101**. The preparation for the balloting may be done precisely in the above-mentioned sequence - first establishing the rules for conducting the balloting, then on the basis of the established rules registering the candidates **102**, then on the basis of the data on the candidates **102** setting up the cryptosystem, then on the basis of the parameters of the cryptosystem which has been set up registering the observers **103** and then on the basis of the data on the observers **103** registering the voters.
The rules for conducting the balloting are at least the rules limiting the minimum the number of observers **103** needed to count the ballots of the voters **101**; the rule determining the maximum number of ballots of the voters **101** allowed for casting by a single voter **101**; and the rule determining the conditions for the start and completion of the balloting. In some examples, the condition for the start and completion of the balloting include at least the time for the start and completion of the balloting, the number of voters **101** after the registering of which the balloting commences, and the number of ballots of the voters **101**, after the casting of which the balloting is completed.
In step **412**, during the registration of the candidates **102**, the balloting organizer **104** matches up each candidate **102** with a candidate **102** identifier, being a prime number:

$$p_i \in \mathbb{Z}_n, \qquad (43)$$

where:

$p_i$      - is the identifier of the i-th candidate **102**,

$\mathbb{Z}$      - is the space of prime numbers,
$n$      - is the maximum number of candidates **102** as established by the rules where all the identifiers of the candidates **102** are different.
In step **413**, the balloting organizer **104** sets up the cryptosystem, i.e., they compute the parameters of the cryptosystem on the basis of the rules established in step **411** for conducting the balloting and the candidate **102** identifiers assigned in step **412**. The parameters of the cryptosystem are at least:

$q$    - a random prime number `` ´´ such that $q$ is larger than any given candidate **102** identifier,

$g$    - the primitive root of $q$,

$s$    - a random prime number $(s \in \mathbb{Z}_q),$

The number $q$ is chosen such that the counting of ballots of the voters **101** after completion of the balloting produces an unambiguous result (i.e., a situation is not possible where the counting of ballots can be done in several ways resulting in several results differing from each other).

In step **414** the balloting organizer **104** registers the observers **103**. During the registration of the observers **103**, the balloting organizer **104** at least verifies the possibility of sending and receiving the ballots of the voters **101**, as well as modifying the decentralized registers of records. The balloting organizer **104** may further verify the correctness of creation of the decentralized registers of records by the observers **103**, verifies the correctness of creation of the public and private encryption keys by the observers **103**, and create the unified balloting key on the basis of the parameters of the cryptosystem calculated in step **413**.

In step **415** the balloting organizer **104** registers the voters **101**. During the registration of the voters **101** the balloting organizer **104** at least verifies the possibility of casting the ballots of the voters **101**, formulates the digital signature of the voter, and sends the unified balloting key created in step **414**.

In step **402** the balloting organizer **104** carries out the balloting: they commence the balloting, monitor the course of the balloting and the rules of the balloting, and complete the course of the balloting.

In step **421** the balloting organizer **104** commences the course of the balloting, during which they at least notify the voters as to the possibility of casting the ballots of the voters **101**, and notify the observers **103** as to the possibility of modifying the decentralized registers of records on the basis of the ballots cast by the voters.

In the event that a voter **101** tries to send a ballot cast by the voter **101** for the modification of the decentralized register of records of the observer **303**, this ballot of the voter will not be counted or if upon completion of the course of the balloting it will be determined that said observer **303** made a mistake during the modification of its decentralized register of records and that decentralized register of records will not be considered during the counting of the collected ballots of the voters.

In step **422** the balloting organizer monitors the course of the balloting, during which at least the following occurs. The balloting organizer verifies the correctness of casting of ballots of the voters on the basis of the rules established in step **411** for conducting the balloting and the parameters of the cryptosystem calculated in step **413**. They balloting organizer then verifies the correctness of the modifying of the decentralized registers of records of the observers **103** of the voters on the basis of the rules established in step **411** for conducting the balloting and the parameters of the cryptosystem calculated in step **413**. Finally, the balloting organizer monitors the conditions for the completion of the balloting in accordance with the rules of the balloting established in step **411**.

In step **423** the balloting organizer **104** completes the balloting process, during which at least the following occurs. The balloting organizer **104** notifies the voters that it is not possible to cast ballots of the voters **101**. The balloting organizer **104** notifies the observers **103** that it is not possible to modify the decentralized registers of records on the basis of the ballots cast by the voters.

In the event that a voter **101** tries to send a ballot cast by the voter **101** for the modification of the decentralized register of records of the observer **303**, this ballot of the voter will not be counted or if it is determined that said observer **303** made a mistake during the modification of its decentralized register of records and that decentralized register of records will not be considered during the counting of the collected ballots of the voters.

In step **403** the balloting organizer **104** sums up the results of the balloting. That is, the balloting organizer **104** verifies the ballots collected, decrypts the ballots collected, and finally counts the ballots collected.

In step **431** the balloting organizer **104** verifies the collected ballots of the voters **101**, during which at least the following occurs. The balloting organizer **104** compares the decentralized registers of records of all observers **103**. From the results of the verification of the decentralized registers of records, the balloting organizer **104** determines the observers **103** who have made mistakes (or deliberate falsifications) during the modification of their decentralized registers of records on the basis of the received ballots cast by the voters **101**. From the results of the determination of observers **103** who have made mistakes, the balloting organizer **104** determines the observers **103** whose data will be used during step **432** in the decryption of the collected ballots of the voters. In the event that the number of observers **103** so determined is less than that established by the rules for conducting the balloting in step **411**, the balloting organizer **104** declares the balloting to be null and void.

In step **432** the balloting organizer **104** performs the decryption on the basis of the parameters of the cryptosystem calculated in step **413** of the collected ballots of the voters **101** as modified on the basis of the obtained ballots cast by the voters **101**. The decryption of the ballots of the voters **101** is done by modification of the decentralized register of records.

In step **433** the balloting organizer **104** counts up the collected ballots of the voters, and after obtaining the results of the balloting the balloting organizer **104** verifies whether they correspond to the rules for conducting the balloting that were established in step **411**.

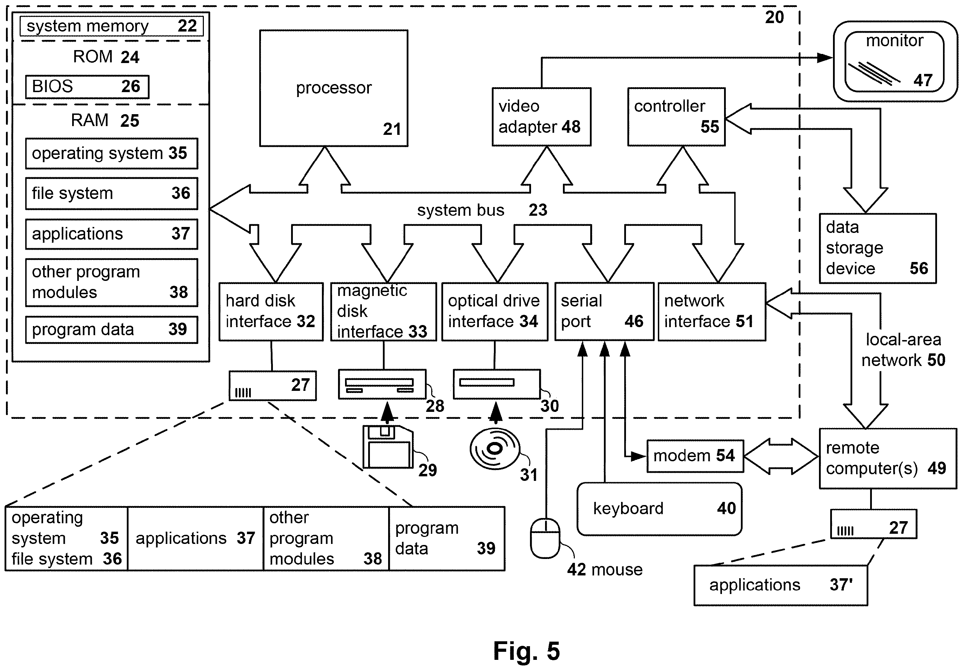

**Fig. 5** is a block diagram illustrating a general-purpose computer system **20** on which systems and methods of determining ballots of voters collected using electronic balloting may be implemented. It should be noted that the computer system **20** can correspond to the system **100**, or the computing devices **301**, **303**, and **304**, for example, described earlier.

As shown, the computer system **20** (which may be a personal computer or a server) includes a central processing unit **21**, a system memory **22**, and a system bus **23** connecting the various system components, including the memory associated with the central processing unit **21**. As will be appreciated by those of ordinary skill in the art, the system bus **23** may comprise a bus memory or bus memory controller, a peripheral bus, and a local bus that is able to interact with any other bus architecture. The system memory may include permanent memory (ROM) **24** and random-access memory (RAM) **25**. The basic input/output system (BIOS) **26** may store the basic procedures for transfer of information between elements of the computer system **20**, such as those at the time of loading the operating system with the use of the ROM **24**.

The computer system **20**, may also comprise a hard disk **27** for reading and writing data, a magnetic disk drive **28** for reading and writing on removable magnetic disks 29, and an optical drive **30** for reading and writing removable optical disks **31**, such as CD-ROM, DVD-ROM and other optical media. The hard disk **27**, the magnetic disk drive **28**, and the optical drive **30** are connected to the system bus **23** across the hard disk interface **32**, the magnetic disk interface **33** and the optical drive interface **34**, respectively. The drives and the corresponding computer information media are power-independent modules for storage of computer instructions, data structures, program modules and other data of the computer system **20**.

In one example, a hard disk **27**, a removable magnetic disk **29** and a removable optical disk **31** connected to the system bus **23** via the controller **55**. It will be understood by those of ordinary skill in the art that any type of media **56** that is able to store data in a form readable by a computer (solid state drives, flash memory cards, digital disks, random-access memory (RAM) and so on) may also be utilized.

The computer system **20** has a file system **36**, in which the operating system **35**, may be stored, as well as additional program applications **37**, other program modules **38**, and program data **39**. A user of the computer system **20** may enter commands and information using keyboard 40, mouse 42, or any other input device known to those of ordinary skill in the art, such as, but not limited to, a microphone, joystick, game controller, scanner, *etc*. Such input devices typically plug into the computer system **20** through a serial port **46**, which in turn is connected to the system bus, but those of ordinary skill in the art will appreciate that input devices may be also be connected in other ways, such as, without limitation, via a parallel port, a game port, or a universal serial bus (USB). A monitor **47** or other type of display device may also be connected to the system bus **23** across an interface, such as a video adapter **48**. In addition to the monitor **47**, the personal computer may be equipped with other peripheral output devices (not shown), such as loudspeakers, a printer, *etc*.

Computer system **20** may operate in a network environment, using a network connection to one or more remote computers **49**. The remote computer (or computers) **49** may be local computer workstations or servers comprising most or all of the aforementioned elements in describing the nature of a computer system **20**. Other devices may also be present in the computer network, such as, but not limited to, routers, network stations, peer devices or other network nodes.

Network connections can form a local-area computer network (LAN) **50** and a wide-area computer network (WAN). Such networks are used in corporate computer networks and internal company networks, and they generally have access to the Internet. In LAN or WAN networks, the personal computer **20** is connected to the local-area network **50** across a network adapter or network interface **51**. When networks are used, the computer system **20** may employ a modem **54** or other modules well known to those of ordinary skill in the art that enable communications with a wide-area computer network such as the Internet. The modem **54**, which may be an internal or external device, may be connected to the system bus **23** by a serial port **46**. It will be appreciated by those of ordinary skill in the art that said network connections are non-limiting examples of numerous well-understood ways of establishing a connection by one computer to another using communication modules.

In various aspects, the systems and methods described herein may be implemented in hardware, software, firmware, or any combination thereof. If implemented in software, the methods may be stored as one or more instructions or code on a non-transitory computer-readable medium. Computer-readable medium includes data storage. By way of example, and not limitation, such computer-readable medium can comprise RAM, ROM, EEPROM, CD-ROM, Flash memory or other types of electric, magnetic, or optical storage medium, or any other medium that can be used to carry or store desired program code in the form of instructions or data structures and that can be accessed by a processor of a general purpose computer.

In various aspects, the systems and methods described in the present disclosure can be addressed in terms of modules. The term "module" as used herein refers to a real-world device, component, or arrangement of components implemented using hardware, such as by an application specific integrated circuit (ASIC) or field-programmable gate array (FPGA), for example, or as a combination of hardware and software, such as by a microprocessor system and a set of instructions to implement the module's functionality, which (while being executed) transform the microprocessor system into a special-purpose device. A module may also be implemented as a combination of the two, with certain functions facilitated by hardware alone, and other functions facilitated by a combination of hardware and software. In certain implementations, at least a portion, and in some cases, all, of a module may be executed on the processor of a general purpose computer (such as the one described in greater detail in Figure 5, above). Accordingly, each module may be realized in a variety of suitable configurations, and should not be limited to any particular implementation exemplified herein.

In the interest of clarity, not all of the routine features of the aspects are disclosed herein. It would be appreciated that in the development of any actual implementation of the present disclosure, numerous implementation-specific decisions must be made in order to achieve the developer's specific goals, and these specific goals will vary for different implementations and different developers. It is understood that such a development effort might be complex and time-consuming, but would nevertheless be a routine undertaking of engineering for those of ordinary skill in the art, having the benefit of this disclosure.

Furthermore, it is to be understood that the phraseology or terminology used herein is for the purpose of description and not of restriction, such that the terminology or phraseology of the present specification is to be interpreted by the skilled in the art in light of the teachings and guidance presented herein, in combination with the knowledge of the skilled in the relevant art(s). Moreover, it is not intended for any term in the specification or claims to be ascribed an uncommon or special meaning unless explicitly set forth as such.

The various aspects disclosed herein encompass present and future known equivalents to the known modules referred to herein by way of illustration. Moreover, while aspects and applications have been shown and described, it would be apparent to those skilled in the art having the benefit of this disclosure that many more modifications than mentioned above are possible without departing from the inventive concepts disclosed herein.

**Claims**

1.   A method for voting in an election using electronic balloting, the method comprises:

receiving a unified balloting key associated with the election;
obtaining a digital signature associated with a user based on voter identification information of the user;
receiving user input selecting one of a plurality of candidates in the election;
generating a ballot for the user comprising data specifying the selected candidate using the unified balloting key and the digital signature; and
transmitting the generated ballot to a computing device associated with an election observer of the election.

2.   The method according to claim 1, wherein generating the ballot comprises:

encrypting a candidate identifier associated with the selected candidate encrypted using the unified balloting key, wherein the candidate identifier comprises a prime number.

3.   The method according to claim 2, wherein the generating the ballot further comprises:

signing the encrypted candidate identifier using the digital signature associated with the user.

4.   The method according to any of claims 1 to 3, wherein the obtained digital signature comprises a public key provided to the election observer to verify the vote cast by the user and a private key used to sign the vote cast by the user.

5.   The method according to any of claims 1 to 4, wherein generating the ballot for the user comprises:

determining as a candidate identifier M associated with the selected candidate, wherein M is a prime number and has a value less than a random prime number q;
selecting a session key $\alpha$, such that $1 < \alpha < q - 1$; and
generating the ballot as a set of number x and y by calculating $x = g^{\alpha} \bmod q$ and $y = h^{\alpha} M \bmod q$, where g is a primitive root of q.

6.   The method according to any of claims 1 to 5, wherein transmitting the generated ballot further comprises:

receiving a list of network addresses of a plurality of computing devices associated with a plurality of election observers of the election;
transmitting the generated ballot to each of the plurality of computing devices associated with the plurality of election observers using the received list.

**7.** The method according to any of claims 1 to 6, wherein generating the ballot for the user comprises using at least one of: ElGamal encryption scheme, a Merkel-Hellman cryptosystem, and a Rabin cryptosystem.

**8.** A system for voting in an election using electronic balloting, the system comprises:

a processor configured to:

receive a unified balloting key associated with the election;
obtain a digital signature associated with a user based on voter identification information of the user;
receive user input selecting one of a plurality of candidates in the election;
generate a ballot for the user comprising data specifying the selected candidate using the unified balloting key and the digital signature; and
transmit the generated ballot to a computing device associated with an election observer of the election.

**9.** The system according to claim 8, wherein generating the ballot comprises:

encrypting a candidate identifier associated with the selected candidate encrypted using the unified balloting key, wherein the candidate identifier comprises a prime number.

**10.** The system according to claim 9, wherein the generating the ballot further comprises:

signing the encrypted candidate identifier using the digital signature associated with the user.

**11.** The system according to any of claims 8 to 10, wherein the obtained digital signature comprises a public key provided to the election observer to verify the vote cast by the user and a private key used to sign the vote cast by the user.

**12.** The system according to any of claims 8 to 11, wherein generating the ballot for the user comprises:

determining as a candidate identifier M associated with the selected candidate, wherein M is a prime number and has a value less than a random prime number q;
selecting a session key $\alpha$, such that $1 < \alpha < q - 1$; and
generating the ballot as a set of number x and y by calculating $x = g^{\alpha} \bmod q$ and $y = h^{\alpha}M \bmod q$, where g is a primitive root of q.

**13.** The system according to any of claims 8 to 12, wherein transmitting the generated ballot further comprises:

receiving a list of network addresses of a plurality of computing devices associated with a plurality of election observers of the election;
transmitting the generated ballot to each of the plurality of computing devices associated with the plurality of election observers using the received list.

**14.** The system according to any of claims 8 to 13, wherein generating the ballot for the user comprises using at least one of: ElGamal encryption scheme, a Merkel-Hellman cryptosystem, and a Rabin cryptosystem.

Fig. 1

Fig. 2

Fig. 3

**400**

**401** preparation for balloting
**402** conducting of the balloting
**403** summing up of results

**411** establishing of rules for balloting → rules of the balloting
**412** registration of candidates → list of candidate identifiers
candidate identification data
**413** setup of cryptosystem → cryptosystem parameters
**414** registration of observers → unified balloting key
observer identification data
**415** registration of voters
voter identification data

**421** commencement of balloting
**422** monitoring of balloting
**423** conclusion of balloting
ballots collected

**431** verification of ballots collected
**432** decryption of ballots collected
**433** counting of ballots collected
results of balloting

Fig. 4

**Fig. 5**

Europäisches
Patentamt

European
Patent Office

Office européen
des brevets

# EUROPEAN SEARCH REPORT

Application Number

EP 18 19 1555

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | RU 2 652 443 C1 (AKTSIONERNOE OBSHCHESTVO LABORATORIYA KASPERSKOGO [RU]) 26 April 2018 (2018-04-26) * page 26, line 17 - line 29 * * page 29, line 22 - line 34 * ----- | 1-14 | INV. G07C13/00 ADD. H04L9/00 |
| X | RU 2 444 063 C1 (ROSSIJSKAJA FEDERATSIJA OT IM KOTOROJ VYSTUPAET FEDERAL NAJA SLUZHBA T) 27 February 2012 (2012-02-27) * the whole document * ----- | 1-14 | |

TECHNICAL FIELDS
SEARCHED (IPC)

G07C
H04L

The present search report has been drawn up for all claims

| Place of search | Date of completion of the search | Examiner |
|---|---|---|
| The Hague | 8 February 2019 | Verhoof, Paul |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
 
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 18 19 1555

This annex lists the patent family members relating to the patent documents cited in the above-mentioned European search report.
The members are as contained in the European Patent Office EDP file on
The European Patent Office is in no way liable for these particulars which are merely given for the purpose of information.

08-02-2019

| Patent document cited in search report | | Publication date | Patent family member(s) | | Publication date |
|---|---|---|---|---|---|
| RU 2652443 | C1 | 26-04-2018 | CN RU US | 109272631 A 2652443 C1 2019019366 A1 | 25-01-2019 26-04-2018 17-01-2019 |
| RU 2444063 | C1 | 27-02-2012 | --------------------------------------- | | |

EPO FORM P0459

For more details about this annex : see Official Journal of the European Patent Office, No. 12/82